**Europäisches Patentamt**

**European Patent Office**

**Office européen des brevets**

(19)

(11) Numéro de publication : **0 346 231 B1**

(12) **FASCICULE DE BREVET EUROPEEN**

(45) Date de publication du fascicule du brevet :
23.09.92 Bulletin 92/39

(51) Int. Cl.⁵ : **B23Q 3/06**, B23B 31/22,
B23Q 16/00

(21) Numéro de dépôt : **89401589.0**

(22) Date de dépôt : **08.06.89**

(54) Perceuse perfectionnée, notamment pour machine programmable.

(30) Priorité : **09.06.88 FR 8807683**

(43) Date de publication de la demande :
**13.12.89 Bulletin 89/50**

(45) Mention de la délivrance du brevet :
**23.09.92 Bulletin 92/39**

(84) Etats contractants désignés :
**CH DE GB LI NL**

(56) Documents cités :
**EP-A- 0 193 745
DE-A- 2 426 760
DE-U- 8 605 002
GB-A- 2 019 269
US-A- 2 884 819**

(73) Titulaire : **AEROSPATIALE Société Nationale Industrielle
37, Boulevard de Montmorency
F-75781 Paris Cédex 16 (FR)**

(72) Inventeur : **André, Joel René Georges
60 Quai Boissay d'Anglas
F-78380 Bougival (FR)**
Inventeur : **Dumargue, Guy
16, rue Nélaton
F-92800 Puteaux (FR)**

(74) Mandataire : **Mongrédien, André et al
c/o SOCIETE DE PROTECTION DES INVENTIONS 25, rue de Ponthieu
F-75008 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

L'invention concerne une perceuse conçue notamment pour être utilisée sur une machine programmable telle qu'un robot.

Lorsque deux pièces doivent être percées simultanément avant d'être assemblées, par exemple au moyen de rivets ou d'organes similaires, il est souhaitable que ces pièces soient plaquées fortement l'une contre l'autre autour du foret qui effectue le perçage. En effet, si un effort de plaquage suffisant n'est pas obtenu, une bavure a tendance à se former entre les pièces, ce qui n'est pas souhaitable. Ainsi, la présence d'une bavure peut conduire à un mauvais assemblage des pièces et favorise ensuite la corrosion de ces pièces. Dans le cas où un produit d'étanchéité tel qu'un mastic est placé entre les pièces avant le perçage, l'application d'un effort de plaquage sur ces dernières est également souhaitable afin d'assurer le fluage de ce produit par écrasement.

Pour appliquer un tel effort de plaquage, on peut avoir recours à des moyens de bridage extérieurs à la perceuse. Cependant, la mise en place de ces moyens de bridage conduit à une perte de temps. De plus, elle ne constitue pas une solution satisfaisante lorsqu'on désire assembler les pièces au moyen d'un robot. En outre, lorsque les pièces à assembler sont de grande dimension et doivent être traversées par de nombreux trous, l'utilisation de moyens de bridage extérieurs ne permet pas d'être certain qu'un effort de plaquage suffisant est appliqué à l'emplacement de chacun des trous au moment de leur perçage.

Dans le document US-A-2 884 819, une machine de fraisage semi-automatique est équipée d'un pied annulaire sur lequel agit un vérin hydraulique à double effet, afin de plaquer la pièce sur son support pendant le fraisage.

Dans le document JP-A-5 859 746, un nez télescopique est monté sur le corps d'une perceuse, autour de la broche et de l'outil, de façon à venir en appui sur la pièce avant le début du perçage et à être plaqué contre cette pièce par un ressort de compression. Ce nez télescopique a pour fonction d'assurer la lubrification de l'outil au ras de la surface de la pièce et d'aspirer les copeaux.

L'invention a principalement pour objet une perceuse utilisable notamment sur une machine programmable et dont la structure particulière lui permet de garantir l'application d'un effort de serrage prédéterminé sur les pièces autour du foret, avant le début du perçage, sans que l'encombrement de la perceuse en soit sérieusement augmenté, et aussi de commander le déclenchement automatique du cycle de perçage de la perceuse.

Ce résultat est obtenu au moyen d'une perceuse comprenant un corps dans lequel une broche porte-outil est montée rotative autour d'un axe de perçage, et coulissante selon cet axe, le corps de la perceuse supportant un nez d'accostage apte à coulisser selon ledit axe, à l'encontre d'un moyen élastique, lorsque ce nez d'accostage vient en appui sur une pièce à percer, de telle sorte que le moyen élastique exerce alors un effort de plaquage sur la pièce, par l'intermédiaire du nez d'accostage, la perceuse étant caractérisée par le fait qu'elle comprend de plus un détecteur de recul du nez d'accostage, apte à déclencher un cycle de perçage lors d'un coulissement déterminé du nez d'accostage à l'encontre dudit moyen élastique.

Avantageusement, le nez d'accostage comporte une butée rotative de fin de course sur laquelle peut venir en appui un épaulement formé sur la broche porte-outil. Cette caractéristique permet de contrôler avec précision la profondeur du perçage, ce qui est particulièrement intéressant lorsque le perçage s'accompagne d'un fraisurage, comme c'est notamment le cas lorsque l'assemblage des pièces est réalisé au moyen de rivets aveugles. Il est à noter que la réalisation de la butée de fin de course sur un nez d'accostage mobile par rapport au corps de la perceuse permet de garantir la précision de la profondeur de perçage ou de fraisurage, malgré le recul du corps de la perceuse qui tend à se produire lorsque l'outil arrive en contact avec la pièce.

De préférence, le nez d'accostage est fixé sur le corps de la perceuse par une bague de retenue démontable comportant un épaulement intérieur contre lequel est normalement en appui un épaulement extérieur du nez d'accostage, sous l'action dudit moyen élastique. Cette caractéristique permet d'adapter sur une même perceuse des nez d'accostage dont la longueur et/ou la forme peuvent être différentes, pour tenir compte notamment d'un changement d'épaisseur et/ou de forme des pièces à percer. Elle permet également d'utiliser des moyens élastiques permettant d'appliquer des efforts de plaquage différents, pour adapter ces efforts à la nature et à l'épaisseur des matériaux à percer.

Par ailleurs, le détecteur de recul peut notamment comprendre un circuit pneumatique comportant un passage formé dans le corps de la perceuse et débouchant à l'extérieur de ce dernier, de façon à être obstrué par le nez d'accostage après ledit coulissement déterminé.

Lorsqu'elle est montée sur une machine programmable, il est avantageux que la perceuse soit équipée d'un changeur automatique d'outil, notamment lorsque les pièces à assembler nécessitent de percer successivement des trous de diamètres différents. La présence d'un changeur automatique d'outil permet également de poursuivre le perçage en cas de bris de forets.

Lorsque la perceuse comprend un changeur automatique d'outil, ce changeur comporte de préférence une bague de verrouillage montée sur la broche porte-outil de façon à pouvoir coulisser selon ledit axe, un moyen élastique interposé entre la broche et la bague de verrouillage pour déplacer cette dernière vers une position arrière de verrouillage, un vérin logé dans le corps de la perceuse et dont un piston est apte à déplacer la bague de verrouillage vers une position avant de déverrouillage lors d'un actionnement dudit vérin, et au moins deux billes logées dans deux passages traversant radialement la broche porte-outil, de façon à faire saillie dans deux demi-gorges formées sur une surface extérieure tronconique de l'outil, complémentaire d'une surface intérieure tronconique de la broche, lorsque la bague de verrouillage est dans sa position arrière de verrouillage, et de façon à être escamotées dans une gorge intérieure de la bague de verrouillage, lorsque cette dernière occupe sa position avant de déverrouillage.

Il est à noter que le changeur automatique d'outil ainsi réalisé permet un changement particulièrement rapide de l'outil et un positionnement axial de cet outil dans la broche très précis, ce qui est essentiel lorsque le nez d'accostage comporte une butée de fin de course déterminant la profondeur du perçage ou du fraisurage.

Egalement afin de permettre un contrôle précis de la profondeur de perçage et de fraisurage, chaque outil comporte de préférence un mandrin à queue conique sur lequel est formée ladite surface extérieure tronconique, un foret prenant appui sur une vis de réglage vissée selon l'axe du mandrin, et des moyens pour immobiliser le foret dans ledit mandrin. Cette configuration permet, grâce à la vis de réglage, d'ajuster sur un banc de préréglage prévu à cet effet le positionnement axial du foret par rapport au mandrin dans lequel il est fixé.

Un mode de réalisation préféré de l'invention, va maintenant être décrit, à titre d'exemple non limitatif, en se référant aux dessins annexés dans lesquels :

– la figure 1 est une vue en coupe longitudinale représentant la partie avant d'une perceuse à cycle automatique conforme à l'invention, conçue pour être montée sur une machine programmable ;

– les figures 2a et 2b sont des vues comparables à la figure 1 illustrant deux étapes successives de prise d'un outil sur un magasin prévu à cet effet, à l'aide de la perceuse selon l'invention ;

– les figures 3a à 3c illustrent trois étapes successives du perçage de deux pièces à l'aide de la perceuse selon l'invention ; et

– la figure 4 est une vue en coupe longitudinale d'un outil conçu pour être utilisé sur la perceuse de la figure 1, lors du réglage de cet outil sur un banc de préréglage approprié.

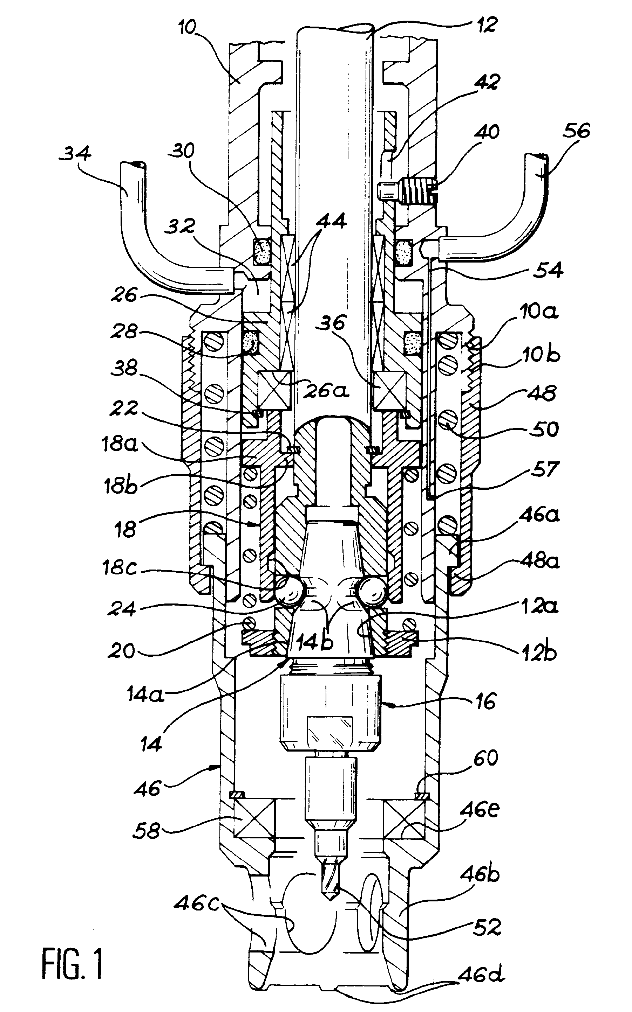

La perceuse dont seule la partie avant est représentée sur la figure 1 est conçue pour être montée sur une machine programmable telle qu'un robot pouvant présenter une forme quelconque (chariot mobile sur un portique horizontal également mobile, bras articulé, etc.).

De façon conventionnelle, la perceuse comprend un corps 10, prévu pour être fixé sur la machine programmable, et une broche cylindrique 12 montée dans le corps 10 de façon à pouvoir tourner autour d'un axe de perçage vertical sur la figure 1 et de façon à pouvoir se déplacer selon cet axe. Des moyens de commande (non représentés), logés dans le corps 10 de la perceuse, permettent de commander l'entraînement en rotation de la broche 12 et le déplacement de cette broche selon son axe, dans l'un ou l'autre sens. Ces moyens de commande, en eux-mêmes connus, sont de préférence mécaniques lorsqu'une avance régulière de l'outil est souhaitée. Dans le cas contraire, ils peuvent également être pneumatiques.

A son extrémité, la broche 12 est creuse et présente une surface intérieure tronconique 12a dans laquelle peut venir s'emboîter une surface tronconique extérieure complémentaire 14a formée sur un mandrin à queue conique 14 constituant une partie d'un outil de perçage 16 qui sera décrit plus en détail par la suite.

La perceuse représentée sur la figure 1 est équipée d'un changeur automatique d'outil dont les différents composants vont maintenant être décrits.

Ce changeur comprend tout d'abord une bague de verrouillage 18 montée autour de l'extrémité de la broche 12, de façon à pouvoir coulisser axialement sur cette dernière, tout en étant solidarisée de celle-ci en rotation, par exemple au moyen de tétons (non représentés) solidaires de la bague 18 et faisant saillie radialement dans des rainures longitudinales (non représentées) formées sur la surface extérieure cylindrique de l'extrémité de la broche 12.

Un ressort hélicoïdal de compression 20 est disposé autour de la bague 18 et prend appui, par l'une de ses extrémités, sur un épaulement 12b formé à l'extrémité de la broche 12 et, par son extrémité opposée, sur un épaulement 18a formé sur la bague 18. Dans l'exemple de réalisation représenté, l'épaulement 12b est constitué par une rondelle vissée à l'extrémité de la broche 12. Le ressort 20 sollicite normalement un épaulement 18b formé à l'intérieur de la bague 18 contre un segment d'arrêt 22 monté dans une gorge formée dans la surface extérieure de la broche 12. La position ainsi occupée normalement par la bague 18 sous l'action du ressort de compression 20 est appelée position arrière de verrouillage.

Dans cette position, deux billes 24 logées dans deux passages diamétralement opposés et traversant radialement l'extrémité de la broche 12 sont maintenues par la bague 18 dans une position dans laquelle ces billes font saillie au-delà de la surface intérieure tronconique 12a de la broche. Lorsqu'un outil 16 est placé dans la broche, les billes 24 sont reçues dans deux demi-gorges en arc de cercle 14b formées sur la surface tronconique 14a du mandrin 14. L'outil 16 se trouve ainsi solidarisé à la fois en translation et en rotation de la broche 12.

Des moyens (non représentés) sont prévus dans les passages dans lesquels sont placées les billes 24, afin d'éviter que celles-ci ne s'échappent à l'intérieur de la broche 12 lorsqu'aucun outil n'est présent.

Le changeur automatique d'outil de la perceuse représenté sur la figure 1 comprend de plus un vérin simple effet logé dans le corps 10 de la perceuse. Plus précisément, le corps de la perceuse constitue le cylindre de ce vérin, dans lequel un piston annulaire 26 est apte à coulisser de façon étanche. Le piston annulaire 26 comporte une partie avant de grand diamètre, qui coulisse de façon étanche à l'intérieur du corps 10 par l'intermédiaire d'un joint d'étanchéité torique 28 reçu dans une gorge formée dans la surface extérieure de cette partie avant. Le piston 26 comporte également une partie arrière de plus petit diamètre dont la surface extérieure coulisse de façon étanche à l'intérieur du corps 10 par l'intermédiaire d'un autre joint torique 30 reçu dans une gorge formée à l'intérieur du corps 10. Une chambre annulaire 32 est ainsi formée entre les joints 28 et 30. Cette chambre 32 est reliée par une conduite 34 à un circuit pneumatique de commande du vérin (non représenté).

A l'intérieur de la partie avant de grand diamètre du piston 26 est logée une butée à aiguilles 36 maintenue en appui contre un épaulement 26a formé dans le piston, par un segment d'arrêt 38. La butée 36 est apte à venir en appui sur l'extrémité arrière de la bague 18. Par conséquent, lorsque du fluide sous pression est introduit par la conduite 34 dans la chambre 32, le piston 26 se déplace vers l'avant à l'intérieur du corps 10 et repousse également vers l'avant la bague 18 à l'encontre de l'action du ressort 20. La bague 18 peut ainsi être amenée dans une position avant de déverrouillage déterminée par la venue en butée de la face avant de la bague 18 contre l'épaulement 12b formé sur la broche 12.

Dans ces conditions, une gorge 18c formée à l'intérieur de la bague 18 se trouve en face des billes 24. Ces dernières peuvent donc s'escamoter en partie à l'intérieur de la gorge 18c et, par conséquent, se dégager des demi-gorges 14b formées sur le mandrin de l'outil 16. Le déverrouillage de ce dernier est ainsi réalisé.

Comme le montre également la figure 1, le piston 26 est immobilisé en rotation à l'intérieur du corps 10 de la perceuse par une vis 40 traversant radialement le corps 10 et dont l'extrémité fait saillie dans une fente axiale 42 formée dans la partie arrière de plus petit diamètre du piston 26. Cet agencement permet aussi de limiter le débattement axial du piston 26 à l'intérieur du corps de la perceuse par la venue en appui de la vis 40 sur l'une ou l'autre des extrémités de la fente 42, selon le sens de déplacement du piston.

Afin de supporter l'extrémité de la broche 12 à l'intérieur du corps 10 tout en permettant la rotation de la broche et les mouvements de translation relatifs entre cette dernière et le piston 26 selon l'axe de perçage, le piston 26 est équipé intérieurement d'au moins un roulement à aiguilles 44 (deux roulements 44 sont prévus dans le mode de réalisation représenté). Ces roulements 44 sont en contact de roulement et de glissement avec la surface extérieure cylindrique de la broche 12.

Conformément à une caractéristique essentielle de l'invention, la perceuse est également équipée d'un nez d'accostage 46 qui est monté à l'extrémité du corps 10 de façon à pouvoir se déplacer relativement à ce dernier parallèlement à l'axe de perçage.

De façon plus précise, le nez d'accostage 46 est fixé à l'extrémité du corps 10 de la perceuse de façon à pouvoir être démonté et remplacé par un nez d'accostage de forme et/ou de dimensions différentes. A cet effet, dans la zone entourant la partie de grand diamètre du piston 26, le corps 10 présente une protubérance tubulaire 10a orientée vers l'avant de la perceuse et dont la surface extérieure est munie d'un filetage 10b. Ce filetage 10b permet de visser sur la protubérance tubulaire 10a une bague extérieure 48 entourant l'extrémité avant du corps 10 tout en ménageant un espace annulaire dans lequel est logé un ressort hélicoïdal de compression 50.

A son extrémité avant, la bague extérieure 48 comporte un épaulement intérieur 48a tourné vers l'arrière et sur lequel est normalement en appui un épaulement extérieur 46a, tourné vers l'avant, formé à l'extrémité arrière du nez d'accostage 46. Le maintien en contact des épaulements 46a et 48a est assuré par le ressort de compression 50 dont les extrémités prennent appui respectivement sur le corps 10, à l'intérieur de la protubérance tubulaire 10a, et sur l'extrémité arrière du nez d'accostage 46.

Dans ces conditions, c'est-à-dire lorsque l'épaulement 46a du nez d'accostage 46 est en appui contre l'épaulement 48a de la bague extérieure 48, la face avant du nez d'accostage 46 fait nettement saillie au-delà de la pointe du foret 52 de l'outil de perçage 16. Par conséquent, comme on le verra plus en détail ultérieurement, l'extrémité du nez d'accostage 46 peut dans un premier temps être amené en contact avec les pièces à percer, ce qui a pour effet de comprimer partiellement le ressort 50. Le contact entre les épaulements 46a et 48a est alors supprimé, de telle sorte que la précontrainte emmagasinée dans le ressort de compression 50 est appliquée en totalité sur le nez d'accostage 46 et transmise aux pièces à percer au travers de ce dernier. La précontrainte emmagasinée dans le ressort 50 détermine donc l'effort de plaquage oui est appliqué sur les pièces lorsque le perçage est effectué.

La partie avant 46b du nez d'accostage présente une forme généralement tubulaire dont le diamètre est aussi faible que possible, afin que l'encombrement du nez n'empêche pas de réaliser des usinages dans des endroits peu accessibles, par exemple dans une cornière.

Cette partie tubulaire 46b du nez d'accostage 46 est traversée par une ou plusieurs ouvertures 46c permettant l'évacuation des copeaux lors du perçage. La face d'extrémité de cette partie 46b peut être plane lorsque les pièces à usiner sont elles-mêmes parfaitement planes. Comme l'illustre la figure 1, elle peut aussi comprendre trois ou quatre parties en saillie 46d régulièrement réparties sur sa circonférence, de façon à permettre un appui satisfaisant sur une pièce de forme quelconque.

Avantageusement, le recul du nez 46 qui se produit lors de la venue en contact de son extrémité avant sur les pièces à usiner peut être utilisé pour déclencher le début du cycle de perçage de la perceuse, lorsque celle-ci est automatique.

A cet effet, la partie d'extrémité du corps 10 de la perceuse est équipée d'un moyen approprié permettant de détecter un déplacement prédéterminé du nez d'accostage 46 à l'encontre du ressort de compression 50.

Dans l'exemple de réalisation représenté sur la figure 1, ce moyen de détection comprend un passage 54 formé dans le corps 10 de la perceuse et dont une extrémité débouche par un trou de fuite 57 dans l'espace annulaire contenant le ressort 50, à une distance prédéterminée en arrière de l'extrémité arrière du nez d'accostage 46, lorsque celui-ci est plaqué contre la butée 48a par le ressort 50. L'extrémité opposée du passage 54 est reliée par une canalisation 56 à un circuit pneumatique (non représenté) comprenant une source de fluide sous pression qui communique avec le passage 54 pendant toute la durée de la phase d'accostage. Cette canalisation 56 est également équipée d'un capteur de fuite (non représenté) qui détecte une élévation de pression prédéterminée consécutive à l'obstruction du trou de fuite 56 par l'extrémité arrière du nez d'accostage 46, après un recul prédéterminé de ce dernier. Ce capteur de fuite commande alors automatiquement l'arrêt du déplacement du robot sur lequel est monté la perceuse et le début du cycle de perçage.

Dans le mode de réalisation représenté sur la figure 1, la perceuse est également équipée d'un limiteur de course permettant de stopper l'avance de la broche 12 de la perceuse lorsque la profondeur de perçage atteint une valeur précise prédéterminée. Cette caractéristique est particulièrement avantageuse lorsque le foret 52 réalise à la fois un perçage et un fraisurage, avant la mise en place d'un rivet d'assemblage. En effet, la profondeur du fraisurage constitue une caractéristique déterminante pour un bonne tenue du rivet.

Ce limiteur de course comprend une butée à aiguilles 58 qui est logée dans le nez d'accostage 46 immédiatement derrière la partie avant 46b, en appui contre un épaulement 46e positionné avec précision par rapport à la face d'extrémité du nez d'accostage, définie dans le mode de réalisation représenté par les protubérances 46d. Le roulement à aiguilles 58 est maintenu contre l'épaulement 46e par un segment d'arrêt 60 logé dans une gorge formée à cet effet à l'intérieur du nez d'accostage 46. Lors de l'avance de la broche 12 au cours du perçage, l'épaulement 12b formé à l'extrémité de cette broche vient en appui sur la butée à aiguilles 58, qui assure ainsi l'arrêt de l'avance de la broche, sans en empêcher la rotation.

Bien entendu, selon la profondeur des perçages à réaliser, la longueur du nez d'accostage 46 ainsi que le positionnement de la butée à aiguilles 58 à l'intérieur de ce nez peuvent varier. Le caractère démontable du nez d'accostage permet de le remplacer à chaque fois que cela est nécessaire.

Grâce au dispositif de changement rapide et automatique d'outils décrit précédemment, il est possible de remplacer en un temps très court un outil par un autre lorsque des forets de diamètres différents doivent être utilisés successivement pour percer les mêmes pièces.

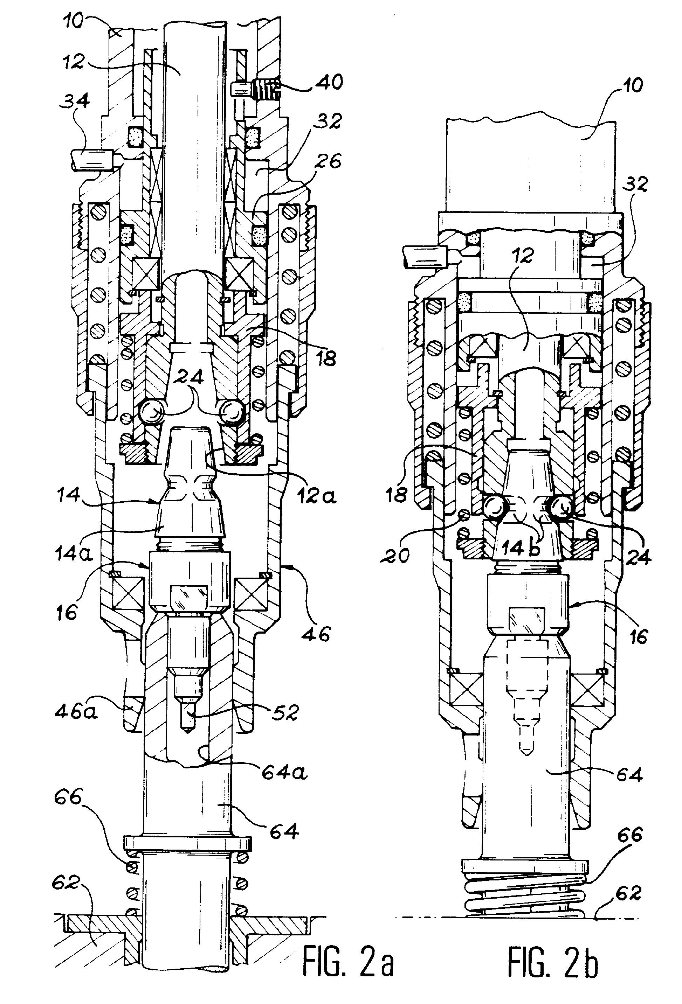

Comme l'illustre les figures 2a et 2b, on dispose à cet effet d'un magasin de forets. Ce magasin comporte un support fixe 62 portant un certain nombre de broches porte-outil 64 dont une seule est représentée sur les figures. Chacune de ces broches 64 fait saillie radialement au-delà de la surface du support 62 et dispose d'une certaine liberté de mouvement parallèlement à son axe. Un ressort de compression 66 interposé entre chacune des broches 64 et le support 62 maintient normalement la broche dans une position de repos illustrée sur la figure 2a, tout en autorisant une certaine rétraction de cette broche à l'intérieur du support à l'encontre du ressort 66, comme l'illustre la figure 2b.

A son extrémité, chacune des broches porte-outil 64 est percée d'un alésage 64a dans lequel peut être reçu le foret 52 d'un outil 16. Les broches 64 étant par exemple orientées verticalement, le mandrin 14 de chacun des outils 16 est alors orienté vers le haut et l'ensemble repose par gravité dans l'alésage 64a correspondant. Si les broches 64 sont orientées différemment, un système approprié tel qu'un jonc logé dans l'alésage 64a permet de maintenir chaque ensemble mandrin 14-outil 16 sur la broche 64 correspondante.

Comme l'illustre la figure 2a, lorsqu'on désire monter l'un des outils 16 du magasin sur la perceuse, on vient placer celle-ci dans l'alignement de l'outil 16 que l'on désire utiliser. Lorsque la perceuse est montée sur un robot, cet alignement n'est qu'approximatif. On déplace ensuite le corps 10 de la perceuse selon son axe de perçage de façon à rapprocher progressivement l'extrémité de la perceuse de l'outil 16 concernée. Au cours de cette opération, le nez d'accostage 46 vient coiffer l'outil 16 , puis la broche porte-outil 64 correspondante. Cela a pour effet d'assurer un alignement automatique de l'axe de la perceuse sur l'axe de l'outil grâce à la configuration particulière de l'extrémité 46b du nez 46, dont la surface intérieure est évasée à son extrémité, puis présente un diamètre pratiquement égal au diamètre extérieur de la broche porte-outil 64.

Lors de cette approche, on voit sur la figure 2a que de l'air sous pression est admis dans la chambre 32 du vérin par la conduite 34. Cela a pour effet, par l'intermédiaire du piston 26, de repousser la bague 18 dans sa position avant de déverrouillage, dans laquelle les billes 24 ne font pas saillie au-delà de la surface intérieure tronconique 12a de la broche.

Par conséquent, l'avance du corps 10 de la perceuse peut se poursuivre jusqu'à ce que la surface extérieure tronconique 14a du mandrin 14 de l'outil soit en contact avec la surface intérieure tronconique 12a de la broche de la perceuse. Comme l'illustre la figure 2b, un léger recul de la broche 64 est alors permis par le ressort 66. Les demi-gorges 14b formées sur le mandrin 14 se trouvent alors en face des billes 24.

Il est à noter qu'aucun indexage en rotation de l'extrémité de la perceuse par rapport à l'outil 16 n'est nécessaire car les extrémités des demi-gorges 14b ne sont séparées que par des parties de faible épaisseur et comportent en outre des rampes d'extrémité permettant le cas échéant une très légère rotation relative entre l'outil et la broche si cela est nécessaire.

La pression dans la chambre 32 est ensuite relâchée, de sorte que la bague 18 est ramenée automatiquement dans sa position arrière de verrouillage sous l'action du ressort 20. Ce mouvement a pour effet de repousser les billes 24 dans les demi-gorges 14b, verrouillant ainsi automatiquement l'outil 16 dans l'extrémité de la broche 12.

La préhension de l'outil 16 est alors réalisée, de sorte que le corps 10 de la perceuse peut reculer par un mouvement inverse du précédent, pour aller effectuer un ou plusieurs perçages à l'aide de l'outil 16.

Lorsqu'on désire venir replacer un outil sur l'une des broches porte-outil 64 du magasin, les opérations qui viennent d'être décrites sont effectuées dans l'ordre inverse. On notera que lorsque l'outil 16 a été replacé sur la broche porte-outil 64 correspondante, il reste sur cette dernière lors du recul du corps 10 de la perceuse sous l'effet de la gravité, lorsque les broches 64 sont verticales. Une bague en un matériau élastomère peut en outre être placée à l'extrémité de l'alésage 64a pour appliquer un effort de serrage sur le foret 52 de l'outil, afin de faciliter sa séparation de la broche 12 de la perceuse.

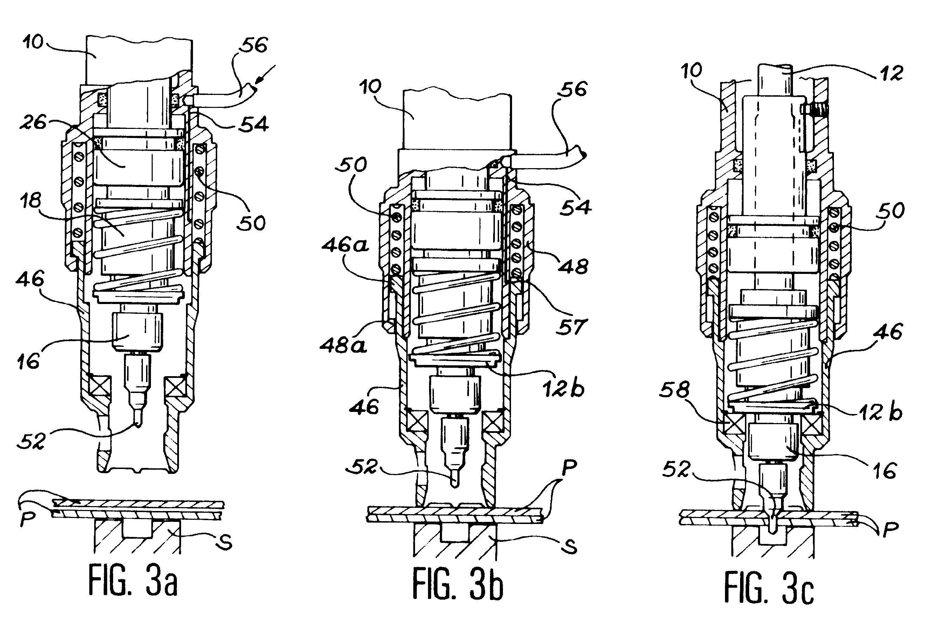

Comme l'illustrent les figures 3a à 3c, chaque opération de perçage se décompose en une phase d'approche ou d'accostage et une phase de perçage proprement dit.

Lors de la phase d'approche, du fluide sous pression est injecté par la canalisation 56, comme l'illustre la figure 3a. On déplace alors progressivement le corps 10 de la perceuse vers les pièces P à percer, qui sont placées sur un support S.

Comme le montre la figure 3b, dès que la face d'extrémité avant du nez d'accostage 46 arrive en contact avec les pièces P, le ressort 50 se comprime et l'épaulement 46a s'éloigne de l'épaulement 48a. Par conséquent, la précontrainte emmagasinée dans le ressort 50, qui était transmise auparavant au corps 10 de la perceuse au travers de la bague extérieure 48, se trouve immédiatement appliquée sur les pièces P par l'intermédiaire du nez d'accostage 46. De cette manière, un effort de plaquage déterminé par cette précontrainte est exercé sur les pièces P, qui sont plaquées l'une contre l'autre en appui sur le support S. En choisissant le ressort 50, qui est interchangeable comme le nez d'accostage 46, on peut ainsi adapter l'effort de plaquage appliqué sur les pièces, notamment en fonction de leur épaisseur et de la nature des matériaux qui les constituent.

Un effort pouvant atteindre des valeurs élevées diverses et variables peut ainsi être appliqué sur les pièces, autour du foret 52, ce qui permet à la fois d'éviter la formation d'une bavure entre ces pièces lors du perçage et de faire fluer un éventuel mastic d'étanchéité déposé auparavant entre les pièces.

Comme on le voit sur la figure 3b, lorsque le recul du nez d'accostage 46 atteint une certaine valeur, le trou de fuite 57, alimenté en air comprimé à partir de la canalisation 56, est automatiquement obturé par l'extrémité arrière du nez d'accostage. Dès que cette obturation se produit, il en résulte une augmentation de pression qui est immédiatement détectée. Un signal est alors émis, qui commande automatiquement l'arrêt de l'avance du corps 10 de la perceuse et le déclenchement du cycle de perçage.

Les moteurs commandant la rotation de la broche 12 portant l'outil 16 ainsi que l'avance régulière de cette broche vers les pièces P selon l'axe de perçage sont alors actionnés.

Comme l'illustre la figure 3c, l'avance conjuguée de la broche 12 et de l'outil 16 se poursuit jusqu'à ce que l'épaulement 12b vienne en appui sur la butée à aiguilles 58 placée à l'intérieur du nez d'accostage 46. Etant donné que la distance séparant la pointe du foret 52 de l'épaulement 12b peut être déterminée avec précision comme on le verra par la suite et que la distance séparant la butée à aiguilles 58 de l'extrémité du nez d'accostage 46 est également déterminée avec précision, la profondeur du perçage et du fraisurage réalisés à l'aide du foret 52 est ainsi parfaitement maîtrisée. En particulier, il est important de noter que la profondeur obtenue est parfaitement indépendante de la position précise occupée par le corps 10 de la perceuse par rapport aux pièces P. En effet, même si un recul du corps 10 se produit lors du perçage comme c'est fréquemment le cas, l'extrémité du nez d'accostage 10 reste plaquée contre les pièces P par le ressort 50, de telle sorte que la butée à aiguilles 58 reste parfaitement positionnée par rapport aux pièces.

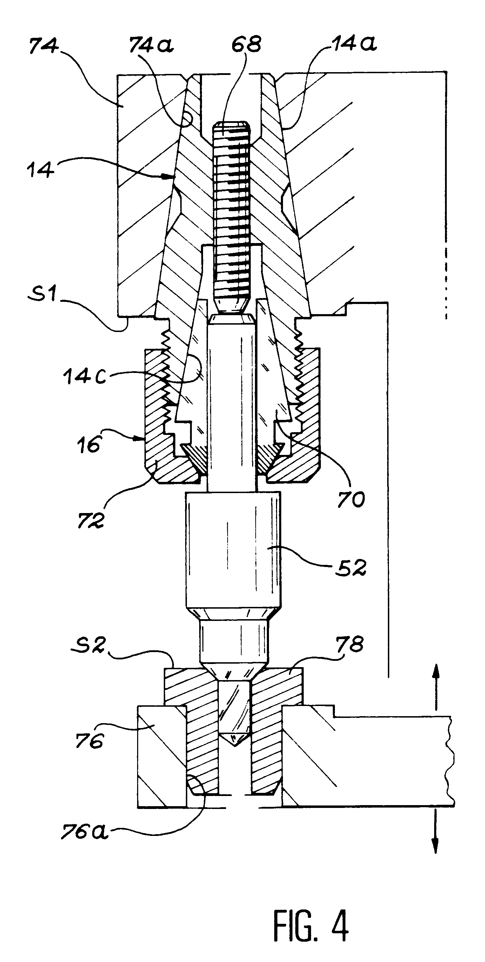

De préférence et comme l'illustre la figure 4, chacun des outils de perçage 16 montés sur la perceuse 10 est conçu de façon à pouvoir être réglé au préalable sur un banc de préréglage prévu à cet effet.

Ainsi, chacun des outils 16 comprend, en plus du mandrin à queue conique 14 et du foret 52, une vis 68 permettant de positionner axialement le foret 52 par rapport au mandrin à queue conique 14, et des moyens permettant d'immobiliser le foret par rapport au mandrin.

Plus précisément, la vis 68 est vissée dans un trou taraudé traversant selon son axe le mandrin 14 et l'extrémité de cette vis est en appui sur la face arrière du foret 52. L'immobilisation du foret dans le mandrin 14 est assurée par un mandrin à pince classique du commerce 70 entourant la tige du foret 52 et dont la surface extérieure tronconique est en appui contre une surface intérieure tronconique 14c usinée à cet effet dans le mandrin à queue conique 14. Une bague 72 vissée sur le mandrin 14 e prenant appui sur le mandrin à pince 70 permet d'assurer le blocage.

Pour effectuer le réglage de l'outil 16, on place celui-ci sur un banc de préréglage comme l'illustre la figure 4. Ce banc se compose d'une partie fixe 74 pourvue d'un évidement tronconique 74a complémentaire de la surface extérieure tronconique 14a du mandrin 14. Le banc de préréglage comprend de plus un bras 76 apte à se déplacer selon l'axe de l'évidement tronconique 74a et dans lequel est formé un alésage 76a situé dans le prolongement de cet évidement tronconique. Une douille 78 adaptée au foret 52 de l'outil est placée dans l'alésage 76a et l'outil est mis en place de telle sorte que la surface tronconique 14a du mandrin soit en appui contre la surface tronconique 74a du support 74 et que le foret 52 soit en appui dans la douille 78. La bague 72 de l'outil est alors desserrée afin de permettre le réglage du positionnement de la pointe du foret ou de la partie du foret assurant le fraisage, par rapport au mandrin 14.

Les faces en regard S1 et S2 respectivement du support 74 et de la douille 78 correspondent sur le banc à la face avant de l'épaulement 12b de la broche 12 de la perceuse et à la surface de la pièce à percer. En réglant l'écartement entre ces faces S1 et S2 sur le banc de préréglage, puis en agissant sur la vis 68, afin de donner à l'outil 16 des dimensions correspondantes, on peut ainsi régler la profondeur de perçage et de fraisurage à la valeur précise désirée.

Lorsque ce réglage est effectué, la bague 72 est vissée afin d'immobiliser le foret 52 dans le mandrin à queue conique 14. Il est à noter qu'au cours du perçage, la vis 68 constitue une butée permettant d'éviter tout recul du foret sous les efforts axiaux d'usinage.

Bien entendu, l'invention n'est pas limitée au mode de réalisation qui vient d'être décrit à titre d'exemple. En particulier, dans certains cas d'utilisation, le changeur d'outil et/ou la butée déterminant la profondeur de perçage peuvent être supprimés. Par ailleurs, les butées à aiguilles peuvent être remplacées par des butées à billes ou à rouleaux. De même, le détecteur pneumatique de recul du nez d'accostage déclenchant le cycle de perçage peut-être remplacé par un détecteur d'un autre type, tel qu'un contact électrique. Enfin, chaque ressort 50 et 20 peut être remplacé par tout autre moyen élastique tel qu'un empilement de rondelles élastiques.

## Revendications

1. Perceuse comprenant un corps (10) dans lequel une broche porte-outil (12) est montée rotative autour d'un axe de perçage, et coulissante selon cet axe, le corps (10) de la perceuse supportant un nez d'accostage (46) apte à coulisser selon ledit axe, à l'encontre d'un moyen élastique (50), lorsque ce nez d'accostage vient en appui sur une pièce à percer, de telle sorte que le moyen élastique exerce alors un effort de plaquage sur la pièce, par l'intermédiaire du nez d'accostage, ladite perceuse étant caractérisée par le fait qu'elle comprend de plus un détecteur de recul (54,56,57) du nez d'accostage (46), apte à déclencher un cycle de perçage lors d'un coulissement déterminé du nez d'accostage à l'encontre dudit moyen élastique (50).

2. Perceuse selon la revendication 1, caractérisée par le fait que le détecteur de recul comprend un circuit pneumatique comportant un passage (54) formé dans le corps (10) de la perceuse et débouchant à l'extérieur de ce dernier, de façon à être obstrué par le nez d'accostage (46) après ledit coulissement déterminé.

3. Perceuse selon l'une quelconque des revendications 1 et 2, caractérisée par le fait qu'elle comprend un changeur automatique d'outils, comportant une bague de verrouillage (18) montée sur la broche porte-outil (12) de façon à pouvoir coulisser selon ledit axe, un moyen élastique (20) interposé entre la broche et la bague de verrouillage pour déplacer cette dernière vers une position arrière de verrouillage, un vérin logé dans le corps de la perceuse et dont un piston (26) est apte à déplacer la bague de verrouillage (18) vers une position avant de déverrouillage lors d'un actionnement dudit vérin, et au moins deux billes (24) logées dans deux passages traversant radialement la broche porte-outil (12), de façon à faire saillie dans deux demi-gorges (14b) formées sur une surface extérieure tronconique (14a) de l'outil, complémentaire d'une surface intérieure tronconique (12a) de la broche, lorsque la bague de verrouillage est dans sa position arrière de verrouillage, et de façon à être escamotées dans une gorge intérieure (18c) de la bague de verrouillage, lorsque cette dernière occupe sa position avant de déverrouillage.

4. Perceuse selon la revendication 3, caractérisée par le fait que le piston (26) du vérin est un piston annulaire qui supporte la broche porte-outil (12) en rotation autour dudit axe de perçage et en translation selon cet axe, ce piston étant en appui sur ladite bague de verrouillage (18), qui tourne avec la broche porte-outil (12), par l'intermédiaire d'une butée tournante (36).

5. Perceuse selon l'une quelconque des revendications 3 et 4, caractérisée par le fait que chaque outil (16) comporte un mandrin à queue conique (14) sur lequel est formée ladite surface extérieure tronconique (14a), un foret (52) prenant appui sur une vis de réglage (68) vissée selon l'axe du mandrin, et des moyens (70,72) pour immobiliser le foret dans ledit mandrin.

6. Perceuse selon l'une quelconque des revendications 1 à 5, caractérisée par le fait que le nez (46) comporte une butée rotative (58) de fin de course sur laquelle peut venir en appui un épaulement (12a) formé sur la broche porte-outil (12).

7. Perceuse selon la revendication 6, caractérisée par le fait que la butée rotative (58) est maintenue en appui contre un épaulement intérieur (46e) formé dans le nez d'accostage (46) par un organe d'arrêt (60).

8. Perceuse selon l'une quelconque des revendications 1 à 7, caractérisée par le fait que le nez d'accostage (46) est fixé sur le corps (10) de la perceuse par une bague de retenue démontable (48) comportant un épaulement intérieur (48a) contre lequel est normalement en appui un épaulement extérieur (46a) du nez d'accostage, sous l'action dudit moyen élastique (50).

## Claims

1. Drill comprising a body (10) in which a tool holder broach (12) is mounted so as to rotate about a drilling axis and slides in accordance with said axis, the drill body (10) supporting an engagement nose (46) able to slide along said axis, in opposition to an elastic means (50), when said nose bears on a part to be drilled, so that the elastic means then exerts an application force on the part via said engagement nose, the drill being characterized in that it also comprises a recoil detector (54, 56, 57) of the engagement nose (46), able to initiate a drilling cycle during a given slide of the engagement nose in opposition to said elastic means (50).

2. Drill according to claim 1, characterized in that the recoil detector comprises a pneumatic circuit having a passage (54) formed in the drill body (10) and issuing to the exterior of the drill, so as to be obstructed by the engagement nose (46) after said given slide.

3. Drill according to either of the claims 1 and 2, characterized in that it comprises an automatic tool changer having a locking ring (18) ted on the tool holder broach (12) so as to slide along the said axis, an elastic means (20) interposed between the broach and the locking ring in order to have the latter towards a rear locking position, a jack housed in the body of the drill and whereof one piston (26) is able to displace the locking ring (18) towards a front unlocking position during the actuation of said jack and at least two balls (24) housed in two passages radially traversing the tool holder broach (12), so as to project into two half-grooves (14b) formed on a truncated cone-shaped outer surface (14a) of the tool, complimentary of an internal truncated cone-shaped surface (12a) of the broach, when the locking ring is in its rear locking position and so as to be retracted into an inner groove (18c) of the locking ring, when the latter occupies its front unlocking position.

4. Drill according to claim 3, characterized in that the jack piston (26) is an annular piston supporting the tool holder broach (12) in rotation about the said drilling axis and in translation along said axis, said piston bears on the said locking ring (18), which turns with the tool holder broach (12) via a rotary stop (36).

5. Drill according to either of the claim 3 and 4, characterized in that each tool (16) has a taper shank (14) on which is formed said truncated cone-shaped outer surface (14a), a bit (52) bearing on a setscrew (68) screwed along the axis of the shank and means (70, 72) for immobilizing the bit in said shank.

6. Drill according to any one of the claims 1 to 5, characterized in that the nose (46) has a rotary end of travel stop (58) on which bears a shoulder (12a) formed on the tool holder broach (12).

7. Drill according to claim 6, characterized in that the rotary stop (58) is kept engaged with the inner shoulder (46e) formed in the engagement nose (46) by a stop member (60).

8. Drill according to any one of the claims 1 to 7, characterized in that the engagement nose (46) is fixed on the drill body (10) by a dismantlable retaining ring (48) having an inner shoulder (48a) against which normally bears an outer shoulder (46a) of the nose, under the action of said elastic means (50).

## Patentansprüche

1. Bohrmaschine mit einem Körper (10), in dem eine Werkzeughalterspindel (12) drehbar um eine Bohrachse und gleitend entlang dieser Achse montiert ist, wobei der Körper (10) der Bohrmaschine eine Berührungssnase (46) trägt, die geeignet ist, entlang dieser Achse gegen eine elastische Vorrichtung (50) zu gleiten, wenn diese Berührungsnase sich auf ein zu bohrendes Teil stützt, so daß die elastische Vorrichtung dann über die Berührungsnase eine Druckwirkung auf das Teil ausübt, wobei die Bohrmaschine gekennzeichnet ist durch die Tatsache, daß sie außerdem einen Rückschrittdetektor (54, 56, 57) für die Berührungsnase (46) umfaßt, der geeignet ist, einen Bohrzyklus bei einem vorgegebenen Gleiten der Berührungsnase gegen die elastische Vorrichtung (50) auszulösen.

2. Bohrmaschine nach Anspruch 1, gekennzeichnet durch die Tatsache, daß der Rückschrittdetektor einen pneumatischen Schaltkreis umfaßt, der einen Durchgang (54) umfaßt, der in dem Körper (10) der Bohrmaschine gearbeitet ist und derart in das Äußere des letzteren mündet, daß er von der Berührungsnase (46) nach dem vorgegebenen Gleiten blockiert wird.

3. Bohrmaschine nach einem der Ansprüche 1 und 2, gekennzeichnet durch die Tatsache, daß sie einen automatischen Werkzeugwechsler umfaßt, der einen Verriegelungsring (18), der auf der Werkzeughalterspindel (12) derart montiert ist, daß er entlang der Achse gleiten kann, eine elastische Vorrichtung (20), die zwischen der Spindel und dem Verriegelungsring angeordnet ist, um letzteren in eine hintere Verschlußposition zu bewegen, eine in dem Körper der Bohrmaschine angeordnete Winde, von der ein Kolben (26) geeignet ist, bei eine Betätigung der Winde, den Verriegelungsring (18) in eine vordere Entriegelungsposition zu bewegen, und wenigstens zwei Kugeln (24) aufweist, die in zwei, die Werkzeughalterspindel radial durchquerende Durchgänge derart angeordnet sind, daß sie in zwei Halbeinschnitten (14b), die auf einer äußeren, kegelstumpfförmigen Oberfläche (14a) des Werkzeugs, die zu einer inneren, kegelstumpfförmigen Oberfläche (12a) der Spindel komplementär ist, vorstehen, wenn der Verriegelungsring in seiner hinteren Verschlußposition ist, und so, daß sie in einen inneren Einschnitt (18c) des Verriegelungsrings eingezogen werden, wenn letzterer seine vordere Entriegelungsposition einnimmt.

4. Bohrmaschine nach Anspruch 3, gekennzeichnet durch die Tatsache, daß der Kolben (26) der Winde ein ringförmiger Kolben ist, der die Werkzeughalterspindel (12) in Drehung um die Bohrachse und in Translation entlang dieser Achse hält, wobei dieser Kolben sich auf den Verriegelungsring (18) stützt, der sich über einen drehenden Anschluß (36) mit der Werkzeugträgerspindel (12) dreht.

5. Bohrmaschine nach einem der Ansprüche 3 und 4, gekennzeichnet durch die Tatsache, daß jedes Werkzeug (16) ein Futter mit einem kegelförmigen Ende (14), auf dem die äußere, kegelstumpfförmige Oberfläche (14a) geformt ist, wobei ein Bohrer (52) sich auf eine Regelungsschraube (68), die entlang der Achse des Futters geschraubt ist, stützt, und Vorrichtungen zum Unbeweglichmachen des Bohrers in dem Futter umfaßt.

6. Bohrmaschine nach einem der Ansprüche 1 bis 5, gekennzeichnet durch die Tatsache, daß die Nase (46) einen rotierenden Anschlag (58) für das Wegende umfaßt, auf den sich eine auf der Werkzeughalterspindel (12) geformte Schulter (12a) stützen kann.

7. Bohrmaschine nach Anspruch 6, gekennzeichnet durch die Tatsache, daß der rotierende Anschlag (58) gestützt gegen eine innere Schulter (46e), die in der Berührungsnase (46) durch ein Anhalteelement (60) gebildet wird, gehalten wird.

8. Bohrmaschine nach einem der Ansprüche 1 bis 7, gekennzeichnet durch die Tatsache, daß die Berührungsnase (46) auf dem Körper (10) der Bohrmaschine durch einen demontierbaren Festhaltering (48) montiert ist, der eine innere Schulter (48a) aufweist, gegen die sich normalerweise eine äußere Schulter (46a) der Berührungsnase unter der Wirkung der elastischen Vorrichtung stützt.

FIG. 1

EP 0 346 231 B1

FIG. 2a     FIG. 2b

11

FIG. 3a

FIG. 3b

FIG. 3c

FIG. 4